# EUROPEAN PATENT SPECIFICATION

(11) **EP 1 130 301 B1**
(45) Date of publication and mention of the grant of the patent: **29.06.2005**
(21) Application number: 01200537.7
(22) Date of filing: 16.02.2001
(51) Int. Cl.: F16K 31/46, F15B 13/04

(54) **Hydraulic distributor**
Hydraulisches Wegeventil
Distributeur hydraulique

(30) Priority: 03.03.2000 IT BO200111
(43) Date of publication of application: 05.09.2001
(73) Proprietor: CNH Italia S.p.A., 41100 Modena (IT)
(72) Inventor: Sedoni, Enrico, 41100 Modena (IT); Balboni, Gabriele, 41030 San Felice Sul Panaro (IT)
(74) Representative: Vandenbroucke, Alberic

(56) References cited:
- GB-A- 2 088 532
- US-A- 2 466 041
- US-A- 3 931 746
- US-A- 4 235 415

## Description

The present invention relates to a hydraulic distributor suitable, for example, for activating a known double-acting hydraulic cylinder, and which may be used on a farm tractor or similar vehicle.

Hydraulic circuits, particularly on farm tractors, are known to feature at least one hydraulic distributor operated manually by the operator to regulate the flow of pressurized fluid, e.g. mineral oil, to and from a respective double-acting cylinder. Hydraulic distributors of this sort are "packed" together to form a hydraulic distribution assembly, are supplied with pressurized oil from the same fluid source, such as a hydraulic pump, and can activate different user devices separately as required by the operator. For example, a typical distribution assembly comprises one or more stacked distributors enclosed by two end plates, and the hydraulic distributors and end plates forming the pack are gripped together in fluidtight manner by ties having threaded ends to which respective nuts are screwed. More particularly, the ties are fitted through holes extending through both the distributors and end plates, and the nuts are screwed to the ends of the ties to "pack" the distributors and end plates together. Each hydraulic distributor normally has a manually operated lever mechanism designed to move a respective shutter in two opposite directions defined by the longitudinal axis of the shutter so as to open and close conduits hydraulically connecting the user device. In some embodiments, the shutter, at least along a portion of its travel, may activate at least one non-return valve via cam means forming part of the shutter. Between said cam means the shutter may comprise two flat faces for increasing outflow of the pressurized oil to and from the user device.

It is therefore essential that, during its travel, the shutter be prevented from rotating accidentally about its longitudinal axis. If this would happen, the cam means no longer would be able to act on the stem of the non-return valve, on account of one of the two flat faces, which does not constitute a valid ramp for opening the non-return valve, being positioned facing the end of the spring-loaded valve stem. As this would result in jamming of the hydraulic distributor, with all the negative effects involved, use has so far been made of lever mechanisms which provide for translational movement of the shutter at the same time preventing accidental rotation thereof.

In actual use, however, such lever mechanisms have proved fairly bulky, and are only practical when the lever is located close to the distributor itself.

In US-A-4.235.415, it is already proposed to eliminate the lever mechanism activating the shutter of a hydraulic distributor, and to adopt instead a cable actuator, in particular a Bowden cable, which, as is known, substantially comprises a wire enclosed inside a sheath in which the wire can slide when pulled or compressed by the operator. As such, the distributor may even be remote-operated, e.g. from the driver's seat. The arrangement of US-A-4.235.415 however suffers from the disadvantage that rotational movement of the shutter is not prevented.

It is therefore an object of the present invention to replace a conventional lever mechanism of a distributor by a cable operated actuator, nonetheless preventing the shutter inside the distributor from rotating during actuation.

According to the present invention, a hydraulic distributor is provided comprising :
- a main body in which is formed a pressurized-fluid inlet opening;
- a first conduit communicating hydraulically with a user device;
- a second conduit communicating hydraulically with said user device; and
- at least one shutter for regulating pressurized fluid flow to and from said user device; said shutter having a longitudinal axis, and the position of the shutter being regulated by an actuating device; said actuating device comprising wire means for moving said shutter in two opposite directions defined by said longitudinal axis.

The distributor is characterized in that said actuating device further comprises guide means associated with said shutter and said main body for preventing said shutter from rotating about said axis; said guide means comprising a bush made integral with said main body and a member made integral with both one end of said shutter and one end of said wire means; said member being restricted to linear movement only along axis inside said bush.

A non-limiting embodiment of the present invention will now be described by way of example with reference to the accompanying drawings, in which:
Figure 1 shows a longitudinal section of a hydraulic distributor in accordance with the present invention;
Figure 2 shows an enlargement of part of Figure 1;
Figure 3 shows a first detail of the Figure 1 and 2 distributor;
Figure 4 shows a section A-A of the first detail in Figure 3;
Figure 5 shows a second detail of the Figure 1 and 2 hydraulic distributor;
Figure 6 shows a section B-B of the second detail in Figure 5; and
Figure 7 shows a number of assembled parts of the Figure 1 and 2 distributor.

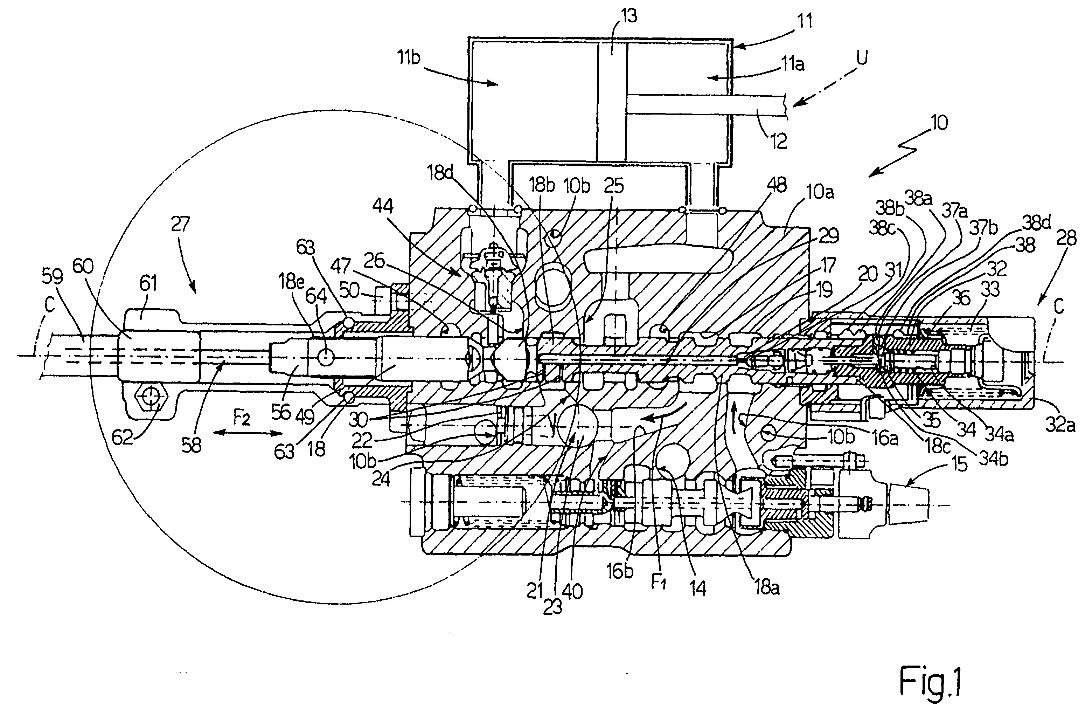

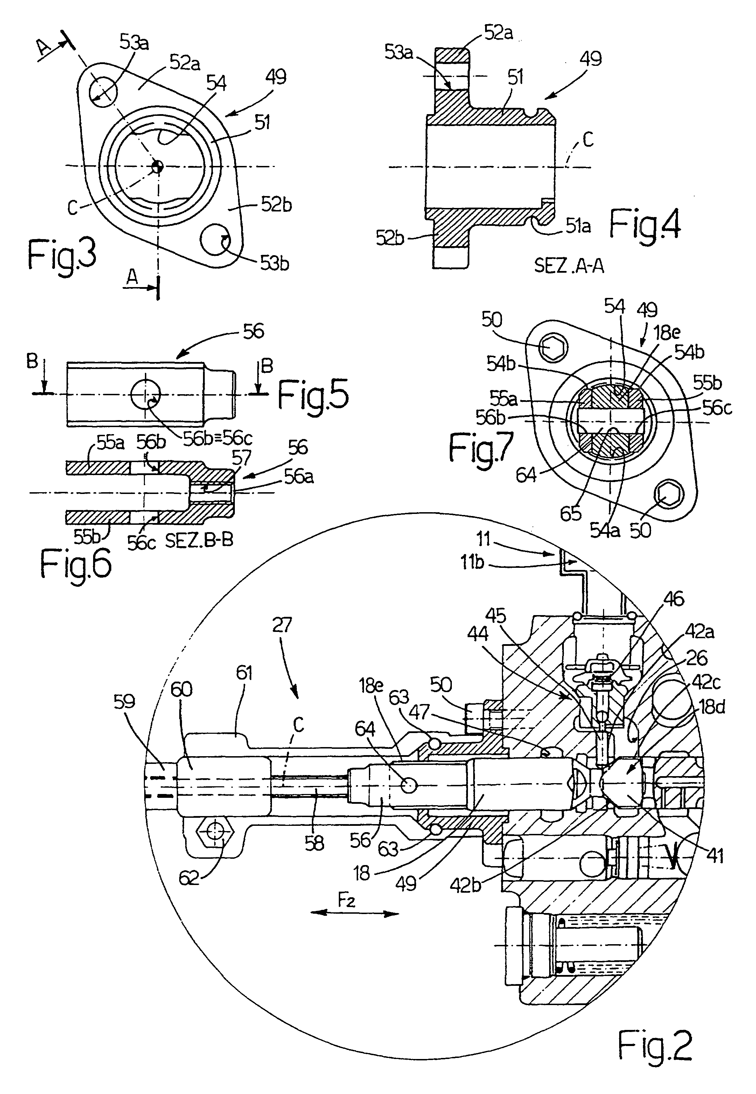

With reference to Figures 1 and 2, number 10 indicates a hydraulic distributor in accordance with the present invention.

Since hydraulic distributor 10 is substantially similar to those commonly used when the flow of pressurized oil to and from a user device, such as a double-acting cylinder 11, has to be controlled, the following description is limited solely to the details essential for a clear understanding of the present invention.

Figure 1 shows a distributor 10 of the 4/4 type, where the first number indicates conventionally the number of oil conduit attachments, and the second the number of positions of the shutter of distributor 10. A rod 12 of a piston 13 of cylinder 11 is connected mechanically to a user device U. More specifically, distributor 10 can take up, as will be seen further, a first "central and locked neutral" position in which piston 13 moves in neither direction even when subjected to an external force; a second position in which piston 13 moves towards the left; a third position in which the piston 13 moves towards the right; and a fourth, ultimate position in which piston 13 is "floating", i.e. can move right- or leftwards depending on the direction of the force applied to rod 12.

Distributor 10 substantially comprises a main body 10a having internal channels for the passage of pressurized fluid, in particular oil, for the functions described in detail later on. Main body 10a comprises a series of bores 10b passing completely therethrough and through which, as already mentioned, respective ties (not shown) are fitted in use to "pack" together the various distributors and end plates (not shown).

Main body 10a has an opening 14 through which pressurized oil is supplied from a collector (not shown) which simultaneously supplies all the hydraulic distributors (not shown) "packed" to form a distribution assembly. Opening 14 comprises a screw adjusting device 15 which allows the operator to adjust the flow of pressurized fluid to the distributor 10, and is connected hydraulically to a conduit 16a for supplying oil to a central distribution seat 17 in which slides a shutter 18. The usual tolerances apply to shutter 18 and seat 17 to ensure smooth slide of the shutter with respect to the seat while at the same time minimizing leakage of the pressurized fluid.

Conduit 16a opens inside a chamber 19 in central seat 17. Together with a sector 18a of shutter 18, chamber 19 forms a choke 20 for regulating oil flow, which, following the path indicated by arrow F1, flows along a conduit 16b to a non-return valve 21. On overcoming the resistance of a spring 22 on a ball 23 of valve 21, the pressurized oil flows into an inlet conduit 24 and back into central distribution seat 17.

A sector 18b of shutter 18 is positioned astride conduit 24 and, in the "central and locked neutral" position shown in Figure 1, prevents pressurized oil to flow neither into a conduit 25 supplying a chamber 11a of cylinder 11, nor into a conduit 26 supplying a chamber 11b of cylinder 11, the chambers 11a and 11b being separated from each other by piston 13.

As shown in Figures 1 and 2, shutter 18 is movable in two opposite directions, indicated by the two-way arrow F2 and defined by the longitudinal axis C of the shutter, to switch the operation of distributor 10 and so activate cylinder 11 as required. Shutter 18 is movable by means of an actuating device 27, the operation of which will be described in detail further on. A device 28 for engaging and releasing shutter 18 is located at the opposite end of actuating device 27, on the opposite side of main body 10a.

A channel 29 extends longitudinally through shutter 18 along axis C, and is connected hydraulically to conduit 24 by two small holes 30 perpendicular to axis C, so that, for any position taken up by sector 18b along axis C, there is always one hole 30 connected hydraulically to one of conduits 24, 25, 26.

In actual use, the pressurized oil, first flowing through at least one hole 30 and along channel 29, opens a valve 31 in device 28, calibrated to a predetermined fluid pressure. Device 28 further comprises a hollow bush 32 fitted integrally to shutter 18 by a threaded fastener 18c held in the "central and locked neutral" position by a spring 33. Bush 32 comprises a channel 34 coaxial with axis C, and is occupied partly by a piston 35 subjected to the elastic action of a spring 36. Bush 32 has three holes 34b (only one shown in Figure 1) equally spaced 120° apart and substantially perpendicular to axis C, and each of which houses two balls 37a, 37b placed freely one on top of the other. Being subjected to the elastic action of spring 36 via conical piston 35, the bottom ball 37b keeps the top ball 37a resting against an inner surface 38 of bush 32, which surface comprises a flat portion 38a and three seats 38b-38d for a purpose explained in detail further on. For the time being, it suffices to say that, when the top ball 37a is located in either of seats 38b, 38d, rightward activation of piston 35, by virtue of its conical surface acting on bottom ball 37b, moves device 28 into a release position, thus enabling shutter 18 to slide in both directions indicated by two-way arrow F2 and back into the "central and locked neutral" position.

A passage 40 is provided upstream from valve 21, and hydraulically connects conduit 16b to adjusting device 15 to retroactively control in a known manner the extent to which device 15 is opened.

Shutter 18 further comprises a sector 18d adjacent to sector 18b and having (Figure 2) two flat faces 41 (only one shown) and two ramps 42a, 42b substantially in the form of truncated-cone sectors. Conduit 26 for supplying oil to chamber 11b of cylinder 11 is located above sector 18d, and the free outflow of pressurized oil from chamber 11b to seat 17 is normally cut off by a non-return valve 44, the stem 45 of which rests on shutter 18 and is loaded elastically in known manner by a spring 46. Stem 45 and ramp 42a form cam means for opening and closing valve 44.

It should be pointed out that, in the example shown, the two faces 41 of sector 18d are flat to permit greater pressurized oil flow from seat 17 to and from chamber 11b of cylinder 11 along conduit 26.

In actual use, cylinder 13 is moved towards the left by simply pulling shutter 18 to the left by means of device 27, as described in detail below, so as to hydraulically connect conduits 24 and 25 to supply oil to chamber 11a of cylinder 11. As such, by increasing the amount of pressurized oil in chamber 11a, piston 13 is moved to the left as desired. However, as chamber 11b is also full of oil, to enable piston 13 to move leftwards, the oil in chamber 11b must be allowed to flow freely along conduit 26 to a drain 47, which requires valve 44 to be open. For this reason, as shutter 18 moves leftwards, ramp 42a of sector 18d of shutter 18 raises stem 45, in opposition to the action of spring 46 and the pressure created in chamber 11b, to allow the oil in chamber 11b to flow into drain 47. At the same time, bush 32 also moves leftwards, so that ball 37a engages seat 38b to "click" bush 32 and shutter 18 together. Bush 32 is held in position by ball 37a inside seat 38b and by pre-loading spring 33, one end of which is integral with bush 32, and the other end of which is fixed to a cover 32a.

As stated, valve 31 inside shutter 18 is calibrated to only let oil pass over and above a given pressure threshold. If the oil pressure in chamber 11a exceeds the set threshold, piston 35 is moved, as already seen, so that ball 37a is dislodged from seat 38b and brought to rest against flat portion 38a by the load on spring 33, which returns to the normal position, so that shutter 18 returns to the "central and locked neutral" position.

If, with ball 37a inside seat 38b, shutter 18 is pulled further leftwards by means of device 27, ball 37a moves into seat 38c into the "floating" operation position, i.e. in which conduit 26 is connected hydraulically to drain 47, and conduit 25 drains off the oil via a drain 48 (Figure 1).

As already mentioned, in "floating" operation mode, piston 13 is allowed to move freely both right- and leftwards under an external load applied by user device U on rod 12. Under this condition, the end of stem 45 of valve 44 obviously rests on the cylindrical surface 42c of sector 18d (Figure 2).

Conversely, to move piston 13 rightwards, shutter 18 is simply moved rightwards, as indicated by arrow F2, so that conduit 24 communicates hydraulically with conduit 26. In this case, the pressure of the oil itself lifts non-return valve 44 to supply oil to chamber 11b of cylinder 11, and the oil in chamber 11a is drained off by conduit 25 and drain 48.

As mentioned, the two flat faces 41 (only one shown in Figure 2) of sector 18d are provided to increase oil flow from seat 17 to and from conduit 26, while the active part of sector 18d is defined by ramp 42a. If, for any reason, shutter 18 were to rotate even only slightly about axis C, the end of stem 45 of valve 44 would no longer contact ramp 42a or surface 42c, as it should be for valve 44 to be opened correctly, but would rest on one of the two flat faces 41 of sector 18d. Undesired rotation of shutter 18 about axis C would therefore result in a practically irreparable breakdown of distributor 10. To prevent this, it is therefore essential that the shutter 18 is prevented from rotating accidentally about axis C when effecting any movement in the direction of arrow F2, and also when device 28 is removed and reassembled.

It is also extremely important that shutter 18 could be activated at some distance from distributor 10, e.g. from the driver's cab (not shown). A particularly interesting solution is to activate the shutter via a cable, e.g. a Bowden cable, which would greatly increase the "flexibility" of device 27 activating shutter 18.

For the above reason, an inventive actuating device 27 has been provided, substantially comprising a bush 49 (Figures 3, 4) fixed by two bolts 50 (only one shown in Figures 1, 2) to main body 10a.

As shown in more detail in Figures 3 and 4, bush 49 comprises a bushing 51 having two integral wings 52a, 52b, each having a respective bore 53a, 53b for receiving a respective bolt 50. As shown in Figures 1-4, bush 49 is perfectly aligned with axis C.

As shown in Figure 3, bushing 51 is substantially cylindrical and has an inner profile 54 for receiving the two prongs 55a, 55b of a fork 56 (Figures 5, 6), so that fork 56 is only permitted to move in the two directions defined by arrow F2. A groove 51a is formed on the outer cylindrical surface of bushing 51 for a purpose which will be explained later on.

One end 56a of fork 56 has a threaded hole 57 wherein a metal wire 58, forming part of an actuating, e.g. Bowden-type, cable 59 (Figure 2) can be fitted in known manner. As known, Bowden cable 59 comprises said wire 58 which is enclosed in a sheath 60 of plastic material and has a metal or plastic terminal. As shown in Figure 2, sheath 60 is fixed to a support 61 by a known fastening device indicated as a whole by 62.

Support 61 is fixed to bush 49 by two pins (not shown in Figure 2) inserted inside two holes 63 in support 61 and engaging groove 51a on bushing 51 (Figure 4).

As shown in Figure 7, prongs 55a and 55b of fork 56 embrace a flat end portion 18e of shutter 18. This end portion 18e is fixed to fork 56 by a pin 64 fitted through holes 56b, 56c formed in prongs 55a, 55b (Figure 6), and through a hole 65 formed in end 18e of shutter 18. Still referring to Figure 7, profile 54 comprises a central circular portion 54a for housing end 18e of shutter 18 and two outer portions 54b shaped according to the outer configuration of prongs 55a, 55b of fork 56. Device 27 according to the present invention therefore provides for remote operation of shutter 18 by means of cable 59, possibly a Bowden cable, while at the same time preventing the shifting shutter 18 from rotating about axis C. As such, shutter 18 can be reliably operated from a remote location without any risk of causing a jamming of distributor 10 due, as stated, to shutter 18 rotating accidentally about longitudinal axis C. Assembly of device 27 is easily deductible from the foregoing description. More specifically, bush 49 is first fitted to main body 10a by means of bolts 50. Thereafter, fork 56 is fitted to the end of wire 58 using known means not shown. Then fork 56 (integral with cable 59) is inserted through the left-hand hole in support 61 so as to project from the right-hand side whereafter fork 56 is fitted to end 18e of shutter 18. Pin 64 is inserted through aligned holes 56b-65-56c and support 61 and bush 49 are brought together. Holes 63 are aligned with groove 51a on bush 51, and the pins (not shown) are inserted to fix support 61 to bush 49, while allowing support 61 to rotate into place about axis C with respect to bush 49. Once support 61 is fixed to bush 49, sheath 60 of cable 59 is fastened to support 61 using known fastening device 62.

## Claims

1. A hydraulic distributor (10) comprising :
- a main body (10a) in which is formed a pressurized-fluid inlet opening (14);
- a first conduit (25) communicating hydraulically with a user device (11);
- a second conduit (26) communicating hydraulically with said user device (11); and
- at least one shutter (18) for regulating pressurized fluid flow to and from said user device (11); said shutter (18) having a longitudinal axis (C), and the position of the shutter being regulated by an actuating device (27); said actuating device comprising wire means (59) for moving said shutter (18) in two opposite directions (F2) defined by said longitudinal axis (C) ; and
**characterized in that** said actuating device (27) further comprises guide means (49, 56) associated with said shutter (18) and said main body (10a) for preventing said shutter (18) from rotating about said axis (C); said guide means (49, 56) comprising a bush (49) fixed to said main body (10a) and a member (56) made integral with both one end (18e) of said shutter (18) and one end of said wire means (59); said member (56) being restricted to linear movement only along axis (C) inside said bush (49).

2. A hydraulic distributor (10) according to claim 1, **characterized in that** said user device (11) is a double-acting cylinder (11).

3. A hydraulic distributor (10) according to claim 1 or 2, **characterized in that** said member (56) is substantially fork-shaped and comprises two prongs (55a, 55b) which, in use, embrace said end (18e) of said shutter (18).

4. A hydraulic distributor (10) according to claim 3, **characterized in that** said bush (49) has an inner guide profile (54) shaped to allow said prongs (55a, 55b) and said end (18e) to slide with respect to said bush (49).

5. A hydraulic distributor (10) according to any of the foregoing claims, **characterized in that** said wire means (59) comprise a Bowden-type cable (59) in turn comprising an inner metal wire (58), an outer sheath (60) made of plastic material, and a metal or plastic terminal.

6. A hydraulic distributor (10) according to claim 5, **characterized in that** said sheath (60) is fixed to a support (61) by fastening means (62); said support (61) being integral with said guide means (49).

7. A hydraulic distributor (10) according to claim 2 and any claim depending therefrom, **characterized in that** a non-return valve (44) is provided for closing a conduit (25, 26) supplying a respective chamber (11a, 11b) of said cylinder (11).

8. A hydraulic distributor (10) according to claim 7, **characterized in that** said shutter (18) comprises a sector (18d) in turn comprising at least one ramp (42a, 42b) for activating a stem (45) of said non-return valve (44), and two flat faces (41) for increasing oil flow to and from the respective chamber (11a, 11b) of said cylinder (11).

9. A hydraulic distributor (10) according to any of the preceding claims, **characterized in that** an engaging and release device (28) is associated with one end (18c) of said shutter (18).

10. A hydraulic distributor (10) according to claim 9, **characterized in that** said engaging and release device (28) can be assembled and removed without acting on said actuating device (27) and/or said shutter (18).

11. A hydraulic distributor (10) according to claim 10, **characterized in that** said engaging and release device (28) can be assembled and removed without inducing accidental rotation of said shutter (18).

## Patentansprüche

1. Hydraulik-Verteiler (10) mit:
- einem Hauptkörper (10a), in dem eine Druckströmungsmittel-Einlassöffnung (14) ausgebildet ist;
- einer ersten Leitung (25), die hydraulisch mit einer Nutzeinrichtung (11) in Verbindung steht;
- einer zweiten Leitung (26), die hydraulisch mit der Nutzeinrichtung (11) in Verbindung steht;
- zumindest einem Ventilschieber (18) zum Regeln der Strömung des Druckströmungsmittels zu und von der Nutzeinrichtung (11), wobei der Ventilschieber (18) eine Längsachse (C) aufweist und die Position des Ventilschiebers durch eine Betätigungseinrichtung (27) geregelt wird, wobei die Betätigungseinrichtung Drahteinrichtungen (59) zum Bewegen des Ventilschiebers (18) in zwei entgegengesetzten Richtungen (F2) umfasst, die durch die Längsachse (C) definiert sind, und
- **gekennzeichnet dadurch, dass** die Betätigungseinrichtung (27) weiterhin Führungseinrichtungen (49, 56) umfasst, die dem Ventilschieber (18) und dem Hauptkörper (10a) zugeordnet sind, um eine Drehung des Ventilschiebers (18) um die Achse (C) zu verhindern, wobei die Führungseinrichtungen (49, 56) eine Büchse (49), die an dem Hauptkörper (10a) befestigt ist, und ein Bauteil (56) umfassen, das einstückig mit sowohl einem Ende (18e) des Ventilschiebers (18) als auch einem Ende der Drahteinrichtungen (59) ausgebildet ist, wobei das Bauteil (56) auf eine lineare Bewegung lediglich entlang der Achse (C) im Inneren der Büchse (49) beschränkt ist.

2. Hydraulik-Verteiler (10) nach Anspruch 1, **dadurch gekennzeichnet, dass** die Nutzeinrichtung (11) ein doppelwirkender Zylinder (11) ist.

3. Hydraulik-Verteiler (10) nach Anspruch 1 oder 2, **dadurch gekennzeichnet, dass** das Bauteil (56) im wesentlichen gabelförmig ist und zwei Zinken (55a, 55b) umfasst, die im Gebrauch das Ende (18e) des Ventilschiebers (18) umgreifen.

4. Hydraulik-Verteiler (10) nach Anspruch 3, **dadurch gekennzeichnet, dass** die Büchse (49) ein inneres Führungsprofil (54) aufweist, das so geformt ist, dass die Zinken (55a, 55b) und das Ende (18e) gegenüber der Büchse (49) gleiten können.

5. Hydraulik-Verteiler (10) nach einem der vorhergehenden Ansprüche, **dadurch gekennzeichnet, dass** die Drahteinrichtungen (59) ein Bowdenzug-Kabel (59) umfassen, das seinerseits einen inneren Metalldraht (58), einen Außenmantel (60), der aus Kunststoff besteht, und ein Metall- oder Kunststoff- Endstück umfasst.

6. Hydraulik-Verteiler (10) nach Anspruch 5, **dadurch gekennzeichnet, dass** der Mantel (60) an einer Halterung (61) mit Hilfe von Befestigungsmitteln (62) befestigt ist, wobei die Halterung (61) einstückig mit der Führungseinrichtung (49) ausgebildet ist.

7. Hydraulik-Verteiler (10) nach Anspruch 2 oder irgendeinem hiervon abhängigen Anspruch, **dadurch gekennzeichnet, dass** ein Rückschlagventil (44) vorgesehen ist, um eine Leitung (25, 26) zu verschließen, die eine jeweilige Kammer (11a, 11b) des Zylinders (11) speist.

8. Hydraulik-Verteiler (10) nach Anspruch 7, **dadurch gekennzeichnet, dass** der Ventilschieber (18) einen Sektor (18d) umfasst, der seinerseits zumindest eine Rampe (42a, 42b) zum Aktivieren eines Schaftes (45) des Rückschlagventils (44) und zwei ebene Flächen (41) zur Vergrößerung der Ölströmung zu und von der jeweiligen Kammer (11a, 11b) des Zylinders (11) umfasst.

9. Hydraulik-Verteiler (10) nach einem der vorhergehenden Ansprüche, **dadurch gekennzeichnet, dass** eine Eingriffs- und Freigabe Einrichtung (28) mit einem Ende (18c) des Ventilschiebers (18) verbunden ist.

10. Hydraulik-Verteiler (10) nach Anspruch 9, **dadurch gekennzeichnet, dass** die Eingriffs- und Freigabe Einrichtung (28) zusammengebaut und entfernt werden kann, ohne das auf die Betätigungseinrichtung (27) und/oder den Ventilschieber (18) eingewirkt wird.

11. Hydraulik-Verteiler (10) nach Anspruch 10, **dadurch gekennzeichnet, dass** die Eingriffs- und Freigabe Einrichtung (28) zusammengebaut und entfernt werden kann, ohne eine zufällige Drehung des Ventilschiebers (18) hervorzurufen.

## Revendications

1. Un distributeur hydraulique comprenant:
- un corps principal (10a) dans lequel est constituée une ouverture d'admission pour fluide pressurisé;
- une première conduite (25) communiquant hydrauliquement avec un dispositif d'utilisateur;
- une seconde conduite (26) communiquant hydrauliquement avec ledit dispositif d'utilisateur; et
- au moins un obturateur (18) pour réguler le débit de fluide pressurisé vers ledit dispositif d'utilisateur (11) et au départ de celui-ci; ledit obturateur (18) possédant un axe longitudinal (C), et la position de l'obturateur étant régulée par un dispositif de commande (27); ledit dispositif de commande comprenant des moyens de câblage (59) pour déplacer ledit obturateur (18) dans deux sens opposés (F2) définis par ledit axe longitudinal (C); et
**caractérisé en ce que** ledit dispositif de commande (27) comprend en outre un moyen de guidage (49, 56) associé avec ledit obturateur (18) et ledit corps principal (10a) pour empêcher ledit obturateur (10a) de tourner autour dudit axe (C); ledit moyen de guidage (49, 56) comprenant un manchon (49) fixé audit corps principal (10a) et un organe (56) faisant partie intégrale à la fois d'une extrémité (18e) dudit obturateur (18) et d'une extrémité desdits moyens de câblage (59); ledit organe étant limité à un mouvement linéaire le long de l'axe (C) à l'intérieur dudit manchon (49).

2. Distributeur hydraulique (10) selon la revendication 1, **caractérisé en ce que** ledit dispositif d'utilisateur (11) est un cylindre à double action (11).

3. Distributeur hydraulique (10) selon la revendication 1 ou 2, **caractérisé en ce que** ledit organe (56) a généralement la forme d'une fourche et comprend deux dents (55a, 55b) qui, lorsqu'elles sont utilisées, épousent ladite extrémité (18e) dudit obturateur (18).

4. Distributeur hydraulique (10) selon la revendication 3, **caractérisé en ce que** ledit manchon (49) possède un profilé de guidage intérieur (54) dont la forme permet auxdites dents (55a, 55b) et à ladite extrémité (18e) de coulisser par rapport audit manchon (49).

5. Distributeur hydraulique (10) selon l'une quelconque des revendications précédentes, **caractérisé en ce que** lesdits moyens de câblage (59) comprennent un câble du type Bowden (59) comprenant à son tour un câble métallique intérieur (58), une gaine extérieure (60) en matériau souple, et une extrémité métallique ou en matière synthétique.

6. Distributeur hydraulique (10) selon la revendication 5, **caractérisé en ce que** ladite gaine (60) est fixée à un support (61) par un moyen de fixation (62); ledit support (61) faisant partie intégrante avec ledit moyen de guidage (49).

7. Distributeur hydraulique (10) selon la revendication 2 et à toute revendication en dépendant, **caractérisé en ce qu'**une soupape antiretour (44) est prévue pour fermer une conduite (25, 26) alimentant une chambre respective (11a, 11b) dudit cylindre (11).

8. Distributeur hydraulique (10) selon la revendication 7, **caractérisé en ce que** ledit obturateur (18) comprend un secteur (18d) comprenant à son tour au moins une rampe (42a, 42b) pour actionner une tige (45) de ladite soupape antiretour (44), et deux faces planes (41) pour augmenter le flux d'huile vers la chambre respective (11a, 11b) dudit cylindre (11) et à partir de celle-ci.

9. Distributeur hydraulique (10) selon l'une quelconque des revendications précédentes, **caractérisé en ce qu'**un dispositif d'engagement et de dégagement (28) est associé avec une extrémité (18c) dudit obturateur (18).

10. Distributeur hydraulique (10) selon la revendication 9, **caractérisé en ce que** ledit dispositif d'engagement et de dégagement (28) peut être assemblé et enlevé sans agir sur ledit dispositif de commande (27) et/ou dudit obturateur (18).

11. Distributeur hydraulique (10) selon la revendication 10, **caractérisé en ce que** ledit dispositif d'engagement et de dégagement (28) peut être assemblé et enlevé sans induire la rotation accidentelle dudit obturateur (18).
